# EUROPÄISCHE PATENTANMELDUNG

(11) **EP 1 962 031 A2**
(43) Veröffentlichungstag der Anmeldung: **27.08.2008**
(21) Anmeldenummer: 07023320.0
(22) Anmeldetag: 01.12.2007
(51) Int. Cl.: F24F 12/00

(54) **Wärmerückgewinnungsmodul**

(30) Priorität: 21.02.2007 DE 102007008512
(71) Anmelder: Robert Bosch GmbH, 70442 Stuttgart (DE)
(72) Erfinder: Stergiaropoulos, Konstantinos, 71032 Böblingen (DE)

(57) **Zusammenfassung**

Die Erfindung betrifft Wärmerückgewinnungsmodule zur zentralen Be- und Entlüftung von Gebäuden und Wohnungen, mit Wärmetauscher, Außenluft-Bypass sowie Klappe und Schieber zum Steuern der Luftströme.

Der Erfindung liegt die Aufgabe zugrunde, den Außenluft-Bypass so zu gestalten, dass der Fertigungsaufwand bei der Herstellung des Wärmerückgewinnungsmoduls und der Verrohrungsaufwand vor Ort möglichst gering, die Bauform möglichst kompakt, und die Handhabung der den Bypass steuernden Vorrichtung möglichst einfach ist.

Der erfindungsgemäße Außenluft-Bypass (5) am Wärmerückgewinnungsmodul (1) ist gekennzeichnet durch seine Anordnung im Inneren des Wärmerückgewinnungsmoduls (1), wobei er mit dem Wärmetauscher (4) als Wärmetauscher-Bypass-Vorrichtung (3) eine bauliche Einheit bildet. Klappe (7) und Schieber (8) bilden zusammen mit ihren Aufhängungen und begrenzenden Wänden als Bypass-Steuervorrichtung (6) eine bauliche Einheit, die ebenfalls im Inneren des Wärmerückgewinnungsmoduls (1) angeordnet ist. Die Stellbewegungen von Klappe (7) und Schieber (8) sind zwangsgekoppelt, was durch Verbinden der senkrecht zueinander ausgerichteten Teile erreicht wird. Die Bypass-Steuervorrichtung (6) grenzt ohne weitere Leitungen oder Kanäle unmittelbar an die Wärmetauscher-Bypass-Vorrichtung (3) an.

## Beschreibung

Wärmerückgewinnungsmodule der hier besprochenen Art werden zur zentralen Be- und Entlüftung von Gebäuden und Wohnungen verwendet.

Energieeinsparziele für den Gebäudebereich und wachsende Anforderungen an die Dichtheit der äußeren Gebäudehülle führen zu einer vermehrten Anwendung von gebäudetechnischen Maßnahmen, die der kontrollierten, maschinellen Wohnungslüftung dienen. Hierbei wird die verbrauchte Raumluft als so genannte Abluft über Lüftungskanäle aus den verschiedenen Wohn- und Arbeitsräumen abgezogen, zu einem zentralen Abluftgebläse geleitet und als Fortluft nach außen geblasen. Hinsichtlich der Frischluftversorgung unterscheidet man zwischen zentraler und dezentraler Versorgung. Bei der dezentralen Frischluftversorgung strömt Außenluft aufgrund des vom Abluftgebläse aufgeprägten Druckgefälles durch eine Vielzahl von Zuluftventilen in den Außenwänden in das Gebäude und ersetzt die abgesaugte Abluft. Bei der zentralen Frischluftversorgung dagegen saugt ein zentrales Zuluftgebläse Außenluft an und verteilt diese als so genannte Zuluft über Lüftungskanäle auf die Räume.

Im Sommerfall sind Abluft und Außenluft warm. Mit beiden Methoden der Frischluftversorgung wird ein ausreichender Luftwechsel erreicht, der eine von Gerüchen, Schadstoffen und Luftfeuchte unbelastete, hygienische Raumluftqualität sichergestellt.

Während der Heizperiode hat man es mit zumeist fossil erwärmter Abluft und kalter Außenluft zu tun. Die Energieeinsparziele werden durch eine Rückführung der in der Abluft enthaltenen Wärme in das Gebäude erreicht. Hierzu dienen Wärmerückgewinnungsmodule, deren Herzstück ein Luft/Luft-Wärmetauscher ist. Der in der warmen Abluft enthaltene Wärmestrom wird im Wärmetauscher auf die eintretende kältere Außenluft übertragen und dem Gebäude mit der Zuluft wieder zugeführt, während die nun abgekühlte Abluft das Gebäude als kalte Fortluft verlässt.

Die aus den Wohn- und Arbeitsräumen abgezogene Abluft ist feucht, ist also ein Gemisch aus trockener Luft und Wasserdampf. Bei der Abkühlung der Abluft im Luft/Luft-Wärmetauscher kann sich die Luftfeuchte als flüssiges Kondenswasser an der Wärmetauscheroberfläche niederschlagen. In diesem Fall sammelt es sich in einer Kondenswasserauffangwanne und wird über einen Kondenswasserablauf aus dem Gerät in die Kanalisation abgeführt. Die Temperatur der Wärmetauscheroberfläche liegt zwischen der der warmen Abluft auf der einen Seite und der der kälteren Außenluft auf der anderen Seite. Fällt die Temperatur der Wärmetauscheroberfläche während der Heizperiode bei sehr kaltem Außenluftstrom unter den Gefrierpunkt, so kann das Kondenswasser gefrieren und den Wärmetauscher blockieren, sofern keine geeignete Gegenmaßnahme greift. Eine mögliche Gegenmaßnahme ist es, einen durchflussvariablen, mit Klappen und/oder Schiebern steuerbaren Außenluft-Bypass-Strom am Wärmetauscher vorbei vorzusehen, so dass der Wärmetauscher von vergleichsweise weniger (kalter) Außenluft als (warmer) Abluft durchströmt und entsprechend weniger abgekühlt wird. Ziel ist es, den Außenluft-Bypass-Strom so einzustellen, dass die Wärmetauscheroberfläche nicht unter den Gefrierpunkt abgekühlt wird, das anfallende Kondenswasser flüssig bleibt und als Flüssigkeit abgeführt wird.

Der Erfindung liegt die Aufgabe zugrunde, den Außenluft-Bypass am Wärmerückgewinnungsmodul so zu gestalten, dass der Fertigungsaufwand bei der Herstellung des Wärmerückgewinnungsmoduls und der Verrohrungsaufwand vor Ort möglichst gering, die Bauform möglichst kompakt, und die Handhabung der den Bypass steuernden Vorrichtung möglichst einfach ist.

Erfindungsgemäß wird dies mit den Merkmalen des Patentanspruches 1 gelöst. Vorteilhafte Weiterbildungen sind den Unteransprüchen zu entnehmen.

Der Außenluft-Bypass am Wärmerückgewinnungsmodul ist gekennzeichnet durch seine Anordnung im Inneren des Wärmerückgewinnungsmoduls, wobei er mit dem Wärmetauscher als Wärmetauscher-Bypass-Vorrichtung eine bauliche Einheit bildet. Eine Klappe dient dem Öffnen und Verschließen des Außenluftweges durch den Wärmetauscher, ein Schieber dient dem Öffnen und Verschließen des Außenluft-Bypasses. Diese Bedienungselemente bilden zusammen mit ihren Aufhängungen und begrenzenden Wänden als Bypass-Steuervorrichtung eine bauliche Einheit, die ebenfalls im Inneren des Wärmerückgewinnungsmoduls angeordnet ist. Die Stellbewegungen von Klappe und Schieber sind zwangsgekoppelt, was durch form-, kraft- oder stoffschlüssiges Verbinden der senkrecht zueinander ausgerichteten Teile erreicht wird. Eine Offen-Stellung der Klappe entspricht dabei einer Schließ-Stellung des Schiebers, und eine Schließ-Stellung der Klappe einer Offen-Stellung des Schiebers. Die Bypass-Steuervorrichtung grenzt ohne weitere Leitungen oder Kanäle unmittelbar an die Wärmetauscher-Bypass-Vorrichtung an. Sie umfasst eine Hauptkammer, in der sich die Klappe bewegt und den Außenluftweg durch den Wärmetauscher freigibt, sowie eine Überströmkammer, die vom Schieber geöffnet und geschlossen wird und den Weg für den Außenluft-Bypass-Strom freigibt, wobei die Hauptkammer dem Außenlufteintrittsquerschnitt des Wärmetauschers und die Überströmkammer dem Außenlufteintrittsquerschnitt des Außenluft-Bypasses zugeordnet ist. Die Stellbewegung der Bypass-Steuervorrichtung geschieht in Abhängigkeit einer physikalischen Bezugsgröße, hierfür wird die Außen-, Zu- oder Fortlufttemperatur herangezogen.

In einer speziellen Ausführungsform ist der Wärmetauscher als Kreuz-Gegenstrom-Plattenwärmetauscher ausgeführt und die Wärmetauscher-Bypass-Vorrichtung in der für Wärmetauscher von Wärmerückgewinnungsmodulen üblichen sechseckigen Form gestaltet. Die Bypass-Steuervorrichtung ist Platz sparend in einem zwischen der sechseckigen Wärmetauscher-Bypass-Vorrichtung und der Wand des Gehäuses gebildeten Zwickel angeordnet.

Ergänzend oder alternativ zum Außenluft-Bypass ist im Inneren des Wärmerückgewinnungsmoduls ein Abluft-Bypass angeordnet, der mit dem Wärmetauscher eine bauliche Einheit bildet. Bei Vereisungsgefahr wird der Abluftstrom komplett über diesen Bypass geleitet, wodurch ebenfalls ein Blockieren des Wärmetauschers vermieden wird.

Das Wärmerückgewinnungsmodul bietet durch die kompakte Integration von Wärmetauscher-Bypass-Vorrichtung und Bypass-Steuervorrichtung den Vorteil des geringen Fertigungs- und Verrohrungsaufwandes. Die Bedienung der Bypass-Steuervorrichtung mit einem Stellantrieb ist einfach und eindeutig.

Die Zeichnung stellt ein Ausführungsbeispiel der Erfindung dar. Es zeigt, jeweils in einer perspektivischen Ansicht,

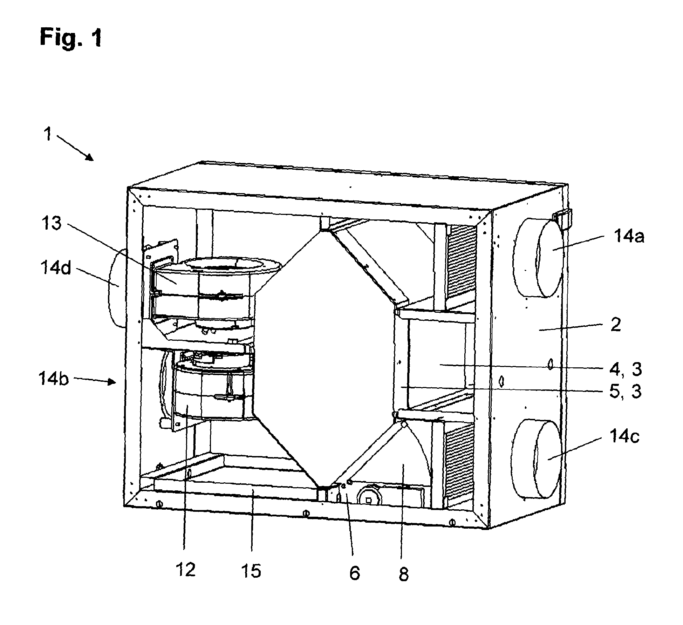

- Fig. 1:: ein Wärmerückgewinnungsmodul und

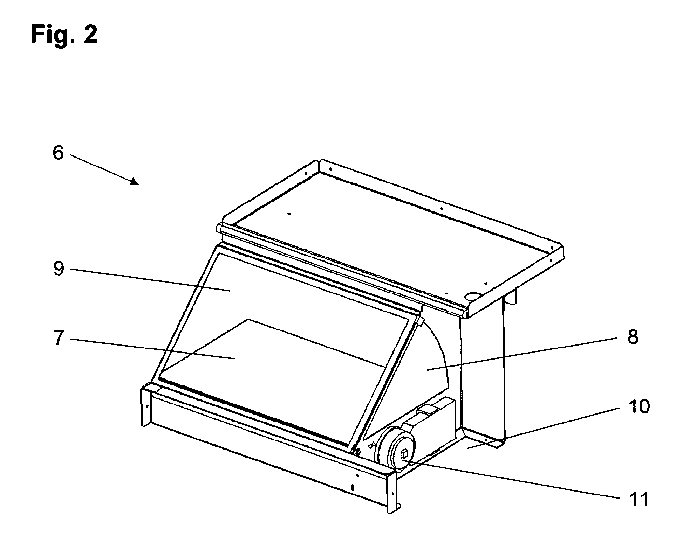

- Fig. 2:: eine Bypass-Steuervorrichtung nach Figur 1.

Das Wärmerückgewinnungsmodul 1 umfasst das Gehäuse 2, die Wärmetauscher-Bypass-Vorrichtung 3 mit Wärmetauscher 4 und Außenluft-Bypass 5, die Bypass- Steuervorrichtung 6 mit Klappe 7, Schieber 8, Hauptkammer 9, Überströmkammer 10 und Stellantrieb 11, das Gebläse 12 für die Abluft-/Fortluftförderung, das Gebläse 13 für die Außenluft-/Zuluftförderung, Anschlussstutzen 14a, 14b, 14c und 14d für hier nicht dargestellte Abluft, Fortluft-, Außenluft- und Zuluftleitungen, eine Kondenswasserauffangwanne 15 mit hier nicht dargestelltem Kondenswasserablauf.

In der Heizperiode bei moderaten Außentemperaturen bis etwa zwischen -5 °C und -10 °C ist Klappe 7 voll geöffnet, Schieber 8 geschlossen. Das Gebläse 13 saugt über den Anschlussstutzen 14c frische, kalte Außenluft an. Diese strömt durch die Bypass-Steuervorrichtung 6 über die Klappe 7 in den Wärmetauscher 4, wo sie erwärmt wird, und weiter als Zuluft über den Anschlussstutzen 14d für Zuluft in das Gebäude. Das Gebläse 12 saugt über den Anschlussstutzen 14a die verbrauchte, warme Abluft aus den Wohn- und Arbeitsräumen ab und fördert sie dabei durch den Wärmetauscher 4, wo sie ihre Wärme über die Wärmetauscheroberfläche an die Außenluft abgibt, über den Anschlussstutzen 14b als Fortluft nach draußen. Die Wärme wird zu einem großen Teil von der verbrauchten Abluft auf die frische Zuluft übertragen, zurückgewonnen, und verbleibt im Gebäude.

Bei tiefen Außentemperaturen unterhalb von etwa -5 °C bis -10 °C ist Klappe 7 nur teilweise geöffnet, damit ist auch Schieber 8 teilweise geöffnet. Das Gebläse 13 saugt wieder frische, kalte Außenluft an. Diese strömt nun zum Teil über die Klappe 7 durch den Wärmetauscher 4, zum Teil über den Schieber 8 durch den Außenluft-Bypass 5. Auf der einen Seite des Wärmetauschers 4 strömt die vom Gebläse 12 geförderte, verbrauchte warmfeuchte Abluft, die ihre Wärme an den Außenluft-Teilstrom, der auf der anderen Seite des Wärmetauschers 4 strömt, abgibt. Die Aufteilung dieses sehr kalten Außenluftstroms auf Wärmetauscher 4 und Außenluft-Bypass 5 wird von der Bypass-Steuervorrichtung 6 so eingestellt, dass die Abluft nicht unter den Gefrierpunkt abgekühlt wird, anfallendes Kondenswasser nicht gefriert sondern flüssig bleibt und über die Kondenswasserauffangwanne 15 und Kondenswasserablauf abgeführt werden kann. Als Maß für die Klappen- und Schieberstellung der Bypass-Steuervorrichtung 6, die vom Stellantrieb 11 angefahren wird, dient ein Temperaturmesswert von Außen-, Zu- oder Fortluft, dessen Messfühler in den Figuren nicht dargestellt ist.

Im Sommer, wenn keine Wärmerückgewinnung aus der Abluft gewünscht wird, kann die gesamte Außenluft über den Außenluft-Bypass 5 geführt, eine Übertragung der Abluftwärme auf den Zuluftstrom so unterbunden werden.

## Patentansprüche

1. Wärmerückgewinnungsmodul (1) zur zentralen Be- und Entlüftung von Gebäuden und Wohnungen, mit einem weitgehend luftdichten Gehäuse (2), einem Wärmetauscher (4) zur Übertragung von im Abluftstrom enthaltener Wärme auf den Zuluftstrom, einem Gebläse (12) für die Abluft-/Fortluftförderung, einem Gebläse (13) für die Außenluft-/Zuluftförderung, Anschlussstutzen (14a, 14b, 14c, 14d) für Abluft-, Fortluft-, Außenluft- und Zuluftleitungen, einer Kondenswasserauffangwanne (15) mit Kondenswasserablauf, einem strömungstechnisch parallel zum Wärmetauscher (4) verlaufenden Außenluft-Bypass (5), einer Klappe (7) zum Drosseln des Außenluftstroms durch den Wärmetauscher (4), und einem Schieber (8) zum Drosseln des Außenluft-Bypass-Stroms,
**dadurch gekennzeichnet, dass** der Außenluft-Bypass (5) im Inneren des Wärmerückgewinnungsmoduls (1) angeordnet ist und mit dem Wärmetauscher (4) als Wärmetauscher-Bypass-Vorrichtung (3) eine bauliche Einheit bildet.

2. Wärmerückgewinnungsmodul (1) nach Anspruch 1,
**dadurch gekennzeichnet, dass** die Klappe (7) und der Schieber (8) zusammen mit ihren Aufhängungen und begrenzenden Wänden als Bypass-Steuervorrichtung (6) eine bauliche Einheit bilden und im Inneren des Wärmerückgewinnungsmoduls (1) angeordnet sind, wobei die Stellbewegungen von Klappe (7) und Schieber (8) zwangsgekoppelt sind.

3. Wärmerückgewinnungsmodul (1) nach Anspruch 1 oder 2,
**dadurch gekennzeichnet, dass** die Zwangskopplung der Stellbewegungen von Klappe (7) und Schieber (8) durch form-, kraft- oder stoffschlüssiges Verbinden der senkrecht zueinander ausgerichteten Teile (7, 8) erreicht wird, wobei eine Offen-Stellung der Klappe (7) einer Schließ-Stellung des Schiebers (8), und eine Schließ-Stellung der Klappe (7) einer Offen-Stellung des Schiebers (8) entspricht.

4. Wärmerückgewinnungsmodul (1) nach einem der Ansprüche 1 bis 3,
**dadurch gekennzeichnet, dass** die Bypass-Steuervorrichtung (6) unmittelbar an die Wärmetauscher-Bypass-Vorrichtung (3) angrenzt und eine Hauptkammer (9), in der sich die Klappe (7) bewegt und den Außenluftweg durch den Wärmetauscher (4) freigibt, sowie eine Überströmkammer (10), die vom Schieber (8) geöffnet und geschlossen wird und den Weg für den Außenluft-Bypass-Strom freigibt, umfasst, wobei die Hauptkammer (9) dem Außenlufteintrittsquerschnitt des Wärmetauschers (4) und die Überströmkammer (10) dem Außenlufteintrittsquerschnitt des Außenluft-Bypasses (5) zugeordnet ist.

5. Wärmerückgewinnungsmodul (1) nach einem der Ansprüche 1 bis 4,
**dadurch gekennzeichnet, dass** die Wärmetauscher-Bypass-Vorrichtung (3) in der für Wärmetauscher von Wärmerückgewinnungsmodulen üblichen sechseckigen Form gestaltet und der Wärmetauscher (4) als Kreuz-Gegenstrom-Plattenwärmetauscher ausgeführt ist, und dass die Bypass-Steuervorrichtung (6) Platz sparend in einem zwischen der sechseckigen Wärmetauscher-Bypass-Vorrichtung (3) und der Wand des Gehäuses (2) gebildeten Zwickel angeordnet ist.

6. Wärmerückgewinnungsmodul (1) nach einem der Ansprüche 1 bis 5,
**dadurch gekennzeichnet, dass** im Inneren des Wärmerückgewinnungsmoduls (1), ergänzend oder alternativ zum Außenluft-Bypass (5), ein Abluft-Bypass angeordnet ist und mit dem Wärmetauscher (4) als Wärmetauscher-Bypass-Vorrichtung eine bauliche Einheit bildet.
